# EUROPEAN PATENT SPECIFICATION

(11) **EP 0 656 079 B1**
(45) Date of publication and mention of the grant of the patent: **16.12.1998**
(21) Application number: 93920073.9
(22) Date of filing: 13.08.1993
(51) Int. Cl.: D02G 3/00, C03C 25/02

(54) **POLYURETHANE COATED FIBERS**
MIT POLYURETHAN BESCHICHTETE FASERN
FIBRES REVETUES DE POLYURETHANNE

(30) Priority: 21.08.1992 US 934133
(43) Date of publication of application: 07.06.1995
(73) Proprietor: PPG INDUSTRIES, INC., Pittsburgh Pennsylvania 15272 (US)
(72) Inventor: GIRGIS, Mikhail, M., Wexford, PA 15090 (US)
(74) Representative: Sternagel, Hans-Günther, Dr.
(86) International application number: US9307670
(87) International publication number: WO9404732

(56) References cited:
- WO-A-86/00166
- US-A- 4 026 852
- US-A- 4 762 751

## Description

### BACKGROUND OF THE INVENTION

Many coatings and treatments for glass and other fibers have been developed over the years for use in varying applications of such fibers, generally for use with polymers where the coated fibers are incorporated into, encapsulated or surrounded by the polymer. Coatings and chemically treated fiber bundles were disclosed in U S 4,663,231; 4,762,750 and 4,762,751, among others.

During the step of combining the fibers coated according to the above patents with the polymers as previously mentioned, the coated fibers are generally preheated. This preheating takes time and energy and may also cause the release of volatile materials.

It is the object of this invention to provide coated fibers which have greatly improved adhesion to various types of polymers and better resistance to the effects of water, alkalinity and acidity and a coating composition for the fibers.

The object of the invention is achieved by a flexible bundle of sized fibers having thereon the dried residue of an aqueous chemical impregnating and coating composition. wherein the composition comprises:
(A) at least one elastomeric, curable polyurethane;
(B) at least one plasticizer having a boiling point above 225°C at a pressure of 13.33 mbar (10 mm Hg) in an amount of at least 15 weight percent of the non-aqueous portion of the composition; and
(C) water in an effective amount to provide an impregnating and coating composition for the bundle of fibers,
the composition being free of a crosslinking agent for the polyurethane.

The invention further provides an aqueous chemical impregnating and coating composition comprising:
(A) at least one elastomeric, curable polyurethane;
(B) at least one plasticizer having a boiling point above 225°C at a pressure of 13.33 mbar (10 mm Hg) in an amount of at least 15 weight percent of the non-aqueous portion of the composition; and
(C) water in an effective amount to provide an impregnating and coating composition for a bundle of fibers,
the composition being free of a crosslinking agent for the polyurethane and the use of said aqueous coating composition for coating and impregnating at least a portion of a fiber bundle, each fiber bundle comprising a plurality of sized fibers.

High modulus, low elongation fibers, such as glass fibers, are used as fibers.

After the coating of the sized fibers, the coated fibers can be cured at ambient or elevated temperatures.

Although applicable to other fibers, the invention is primarily useful with glass fibers. Glass fibers are formed, for example, by the method mentioned in U S-A-4,762,751. Prior to coating with the impregnating and coating composition, the fibers are treated with an aqueous chemical sizing composition which dries to leave a moisture reduced residue on the fibers. A plurality of fibers are then gathered together constituting a flexible bundle of sized, high modulus, low elongation fibers to be impregnated and coated according to the present invention.

In addition to the above ingredients for the impregnating coating composition, a number of other optional ingredients may be included. Ingredients such as an emulsifier and/or a microcrystalline wax dispersion may be used. Other common fiber treating chemicals may be present also such as anti-static agents, pigments or dyes, silane coupling agents, fire retardants, etc.

When the fibers used in the invention are glass fibers they may be those such as "E glass", "S glass", "D glass" or any of the glasses known in the art. The aqueous sizing composition is applied 20 by sprayers, rollers, belts, or the like. Non-starch sizes are preferred and a suitable non-starch aqueous chemical sizing composition for glass fibers is disclosed in U S-A-4,390,647. The sized glass fibers are gathered into bundles comprising a plurality of individual fibers, generally from 200 to more than 3000. The bundles are usually wound onto a forming package and the sizing is dried at room temperature or by oven heating. The sized glass fibers generally have between about 0.05 and 5 percent of sizing composition based on the weight of the glass fiber. The aqueous sizing composition has a hydrophilic reducing agent such as a coupling agent and a protectant, where the protectant can be a glass fiber lubricant or a glass fiber film former. Additional ingredients like friction-reducing agents and/or antistatic agents may be present. Any coupling agent, glass fiber lubricant or glass fiber film forming polymer known to those skilled in the art can be used. As an example, the sizing composition and the application of the size and the application of the coating to the sized glass fibers and the types of fibers used can be in accordance with U.S. Patent No. 4,762,751.

The largest single component of the aqueous impregnating coating composition, besides water, is a polyurethane polymer. By the use of the term polyurethane, it is meant to include reaction products of organic compounds having at least two active hydrogens and di and/or polyisocyanates, wherein the resulting polymer is an elastomeric curable polyurethane or polyurethane-urea type polymer. These materials are noncrystalline in the undeformed state and they have a sufficiently high molecular weight to make them elastomeric materials. These materials also have a glass transition temperature of around 0°C or less. Suitable polyurethane polymers are described in U.S. Patent Nos. 4,143,091; 4,208,494; 4,208,495; 4,066,591 and 4,762,751. The preferred polyurethane is that sold as Witcobond^{®} W-290H, which is milky white in appearance, aliphatic in type with a percent solids level and with a particle size of around 5 microns, a pH at 25°C (77°F) of 7.5, a viscosity as measured by Brookfield LVF in cps of 200 and surface tension of 42 dynes/cm. The film properties of the 290H material, when cured with 6.5 parts of epoxy resin dispersion like Witcobond^{®} XW for 100 parts of urethane latex, are: 4500 psi tensile strength, 720 percent elongation and moduli of 250 psi at 100%, 540 psi at 300% and 1550 psi at 500%. The amount of polyurethane can range from 45 to 80 weight percent of the non-aqueous portion of the impregnating coating composition.

One or more softening agents or plasticizers are also present in the aqueous impregnating coating composition. A key feature of the invention is that the plasticizer should have a high boiling point such that it will not become volatile during the impregnation of the bundles of fiber or during subsequent combination with the polymer composition. High boiling point plasticizers generally have high molecular weights as well. Higher boiling point plasticizers give greater adhesion and less volatility in processing than the medium or low boiling point plasticizers.

High boiling point plasticizers means plasticizers with boiling points above 225°C (437°F) at a pressure of 13.33 mbar (10 mmHg). One such plasticizer is Santicized^{®} 160 produced by Monsanto Corporation which is a clear oily liquid having a boiling point of 240°C (464°F) at 13.33 mbar (10 mmHg) a specific gravity of 1.12. Another suitable plasticizer is diisononyl phthalate (DINP) (sold as PX-109 by Aristech Chemical Corporation) which has a boiling point of 252°C (486°F) at 6.67 mbar (5 mmHg), a molecular weight of 418, a pour point of -45°C, a specific gravity of 0.971 at 25°C/25°C, a flash point of (435°F) 224°C , a viscosity of 72 mPas (cps) at 25°C (77°F) and a refractive index of 1.485 at 25°C. A particularly suitable plasticizer for use in this invention is mixed normal alkyl trimellitate sold as PX-336 by Aristech Chemical Corp. The common name of PX-336 is 1,2,4-Benzenetricarboxylic acid, mixed hexyl, octyl and decyl ester, and the chemical formula is C₆H₃(COOR)₃ where R=C₆,C₈,C₁₀ alkyls. The PX-336 material has a boiling point of 275°C at 1.33 mbar (1 mmHg), a molecular weight of 585, a freeze point of -17°C, a specific gravity of 0.975 at 25°C/25°C, a flash point of (532°F) 278°C , a viscosity of 103 mPas (cps) at 25°C and a refractive index of 1.482 at 25°C.

Although plasticizers are generally used in amounts of less than 10 weight percent in the compositions of the prior art, an important feature of the present invention is that the plasticizer be present in an amount of at least 15 weight percent. The resulting compositions have excellent adhesion to various polymers although until now it had been believed by those skilled in the art that such amounts of plasticizer would result in a loss of adhesion. The exact amount of plasticizer employed is dependent on the rigidity of the polyurethane used and can range from 15 to 40 weight percent of the non-aqueous portion of the impregnating coating composition.

An emulsifier may be used with this invention to aid in the emulsification of the plasticizer. Preferred are sorbitan based emulsifiers, examples being polyoxyethylene (4) sorbitan monolaurate and polyoxyethylene (5) sorbitan monolaurate which are produced by ICI America Inc. under the trade names Tween^{®} 21 emulsifier and Tween^{®} 81 emulsifier, respectively. Tween 21 has a flash point of 410°F (210°C) C.O.C. (Cleveland Open Cup), a specific gravity of 1.1 and is a yellow oily liquid. Tween 81 has a flash point of greater than 300°F (149°C) C.O.C., and is also a yellow oily liquid. If used, the emulsifier is generally present in an amount of up to about 20 percent, preferably about 10 weight percent, of the plasticizer.

One or more waxes may also be included in the practice employed in this invention wherein the wax can be dispersed or emulsified in water with any suitable emulsifier known to those skilled in the art. The wax may be included in the aqueous coating composition in a pre-emulsified or pre-dispersed form. The preferred waxes are the microcrystalline wax materials. Examples of microcrystalline waxes include the anionic Polymekon SPPW-40 available from Petrolite Corporation-Bareco Division of Tulsa, Oklahoma which is a hydrocarbon/water dispersion of 40 percent solids. Another material is Mobilcer Q microcrystalline wax from Mobil Corporation which has a solids content of 50.5 weight percent, a melt point of 71°C (160°F) and an emulsion density of 7.9. Another material is the nonionic Michemlube^{®} 296 from Michelman Inc. The amount of microcrystalline wax can range from 0 to 25 weight percent of the non-aqueous portion of the impregnating coating composition.

It is preferred to cure the impregnating coating composition at elevated temperatures through an oven in a continuous manner. An example of this process is disclosed in US-A-5,052,125.

Examples of the impregnating coating composition in accordance with this invention and comparative examples A, B, C are given in the following table in grams:

| | A | B | C | D |
|---|---|---|---|---|
| Witcobond^{®} 290H polyurethane | 800 | 800 | 800 | 800 |
| PX-336 plasticizer | 100 | 200 | 50 | 100 |
| Tween 21^{®} emulsifier | 10 | 20 | 5 | 10 |
| Witcobond^{®} XW crosslinker | 60 | 60 | 60 | 0 |
| Polymekon SPPW-40 wax | 0 | 60 | 60 | 0 |
| Water | 2000 | 2000 | 2200 | 1800 |

The above formulations were coated onto a bundle of glass fibers comprised of individual fibers which had been produced and sized as mentioned above. The example D showed an increase in adhesion when compared to fibers produced according to U S -A-4,762,751. For instance, the impregnated bundles of glass fibers according to Example B above had properties compared to the impregnated bundles of glass fibers produced according to US -A-4,762,751 (USP '751) as follows:

| Strand Property | Example B | USP '751 |
|---|---|---|
| Tensile strength, (lbs.) x 4.448 N | 242 | 250 |
| Tensile stiffness, (lbs./%) x 4.448 N/% | 85 | 88 |
| Adhesion (compound 1)(lbs./in.) N/25.4 mm | (93) 413.7 | (68) 302.5 |
| Adhesion (compound 2) (lbs./in.) N/25.4 mm | (85) 378.1 | (63) 280.2 |
| MIT flex, cycles | 11236 | 12981 |
| Water aging; tensile, (lbs) x 4.448 N | 224 | 238 |
| Water aging; flex, cycles | 6645 | 2572 |
| Humidity aging; tensile, (lbs) x 4.448 N | 238 | 228 |
| Humidity aging; flex, cycles | 6654 | 1692 |
| Alkali exposure; tensile, (lbs) x 4.448 N | 157 | 111 |
| Acid exposure; tensile, (lbs) x 4.448 N | 131 | 101 |
| outgassing, % | 0.35 | 0.84 |

The adhesion was measured using ASTM test method D-1871 with two proprietary PVC compounds supplied by two manufacturers. The MIT flex test was performed according to ASTM test method D-2176 using a 1.52 µm (0.06 mil) head. The tensile strength was measured using an Instron tensile testing machine with a 226.8 kg (500 pound) load cell and a rubber covered drum clamp. Outgassing was measured by heating a known weight of the sample in a hot air oven at (250°F) 121°C for two hours, reweighing and calculating the percentage of volatiles lost from the samples. The alkali resistance was performed by soaking the coated fibers in a 1 normal solution of sodium hydroxide (NaOH) at room temperature (72°F) 22°C for 30 minutes, rinsing the strand twice with tap water, drying the strand at (250°F) 121°C for 5 minutes, cooling and then testing the tensile strength as above. The acid resistance was performed by soaking the coated fibers in a 3 normal solution of hydrochloric acid (HCl) at room temperature (72°F) 22°C for three hours, rinsing the strand twice with tap water, drying the strand at (250°F) 121°C for 5 minutes, cooling and then testing the tensile strength as above. The humidity resistance was tested by placing the strand in a humidity chamber for 1 month at (120°F) 49°C and 98 percent relative humidity, cooling to room temperature and then testing the tensile strength as above. The water aging resistance was tested by soaking the strand in tap water for 1 month at room temperature (72°F) 22°C and then drying the strand and testing the tensile strength as above.

The bundles of fibers treated in accordance with this invention showed an increase of approximately 35% in adhesion to the PVC compounds, an increase of about 41% in alkali resistance, about 30% in acid resistance and about 41% less outgassing than the USP '751 strand. The bundles also had significantly improved flexibility after water aging and humidity aging when compared to the USP '751 strand.

## Claims

1. A flexible bundle of sized fibers having thereon the dried residue of an aqueous chemical impregnating and coating composition, wherein the composition comprises:
(A) at least one elastomeric, curable polyurethane;
(B) at least one plasticizer having a boiling point above 225°C at a pressure of 13.33 mbar (10 mm Hg) in an amount of at least 15 weight percent of the non-aqueous portion of the composition; and
(C) water in an effective amount to provide an impregnating and coating composition for the bundle of fibers,
the composition being free of a crosslinking agent for the polyurethane.

2. The flexible bundle of sized fibers according to claim 1, wherein the aqueous chemical coating composition further comprises (D) a microcrystalline wax dispersion.

3. The flexible bundle of sized fibers according to claim 1, wherein the aqueous chemical coating composition further comprises (E) a sorbitan based emulsifier in an amount of up to 20 weight percent of said plasticizer (B).

4. The flexible bundle of sized fibers according to claim 1, wherein the aqueous chemical coating composition further comprises (F) a silane coupling agent.

5. The flexible bundle of sized fibers according to claim 1, wherein the aqueous chemical coating composition further comprises (G) a water soluble, dispersible or emulsifiable fire retardant.

6. The flexible bundle of sized fibers according to claim 1, wherein the aqueous chemical coating composition further comprises (H) a water soluble, dispersible or emulsifiable dye or pigment.

7. The flexible bundle of sized fibers according to claim 1, wherein the aqueous chemical coating composition further comprises (I) an antistatic agent.

8. The flexible bundle of sized fibers according to claim 1, wherein the plasticizer (B) is mixed normal alkyl trimellitate.

9. The flexible bundle of sized fibers according to any of claims 1 to 8, wherein the fibers are glass fibers.

10. A flexible bundle of sized glass fibers according to claims 1, 2, and 3, wherein the aqueous chemical coating composition comprises:
(A) from 45 to 80 weight percent of said coating composition on a non-aqueous basis of one or more elastomeric, curable polyurethanes;
(B) from 15 to 40 weight percent of said coating composition on a non-aqueous basis of one or more plasticizers having a boiling point above 225°C at a pressure of 13.33 mbar;
(C) water in an effective amount to provide an impregnating and coating composition for the bundle of fibers;
(D) at least one microcrystalline wax dispersion in an amount of said coating composition on a non-aqueous basis of 0 to 25 weight percent; and
(E) at least one sorbitan based emulsifier in an amount of 10 weight percent of said plasticizer.

11. The flexible bundle of sized fibers according to claim 2, wherein the wax is a hydrocarbon aliphatic wax in an aqueous medium.

12. The flexible bundle of sized fibers according to claim 1, wherein the polyurethane (A) is aliphatic and dispersible, emulsifiable or water soluble.

13. An aqueous chemical impregnating and coating composition comprising:
(A) at least one elastomeric, curable polyurethane;
(B) at least one plasticizer having a boiling point above 225°C at a pressure of 13.33 mbar (10 mm Hg) in an amount of at least 15 weight percent of the non-aqueous portion of the composition; and
(C) water in an effective amount to provide an impregnating and coating composition for a bundle of fibers,
the composition being free of a crosslinking agent for the polyurethane.

14. The aqueous impregnating composition according to claim 13, further comprising an ingredient selected from the group consisting of a microcrystalline wax dispersion, emulsifier, silane coupling agent, fire retardant, dye, pigment and an antistatic agent.

15. Use of the aqueous coating composition according to any of claim 13 and 14 for coating and impregnating at least a portion of a fiber bundle. each fiber bundle comprising a plurality of sized fibers.

## Patentansprüche

1. Flexibles Bündel geschlichteter Fasern mit dem getrockneten Rückstand einer wäßrigen chemischen Imprägnier- und Beschichtungszusammensetzung auf denselben, wobei die Zusammensetzung enthält:
(A) mindestens ein elastomeres härtbares Polyurethan,
(B) mindestens einen Weichmacher mit einem Siedepunkt über 225°C bei einem Druck von 13,33 mbar (10 mm Hg) in einer Menge von mindestens 15 Gew.-% des nichtwäßrigen Anteils der Zusammensetzung und
(C) Wasser in einer wirksamen Menge, um eine Imprägnier- und Beschichtungszusammensetzung für das Faserbündel zu schaffen,
wobei die Zusammensetzung kein Vernetzungsmittel für das Polyurethan enthält.

2. Flexibles Bündel geschlichteter Fasern nach Anspruch 1, dadurch gekennzeichnet, daß die wäßrige chemische Beschichtungszusammensetzung weiterhin (D) eine mikrokristalline Wachsdispersion enthält.

3. Flexibles Bündel geschlichteter Fasern nach Anspruch 1, dadurch gekennzeichnet, daß die wäßrige chemische Beschichtungszusammensetzung weiterhin (E) einen auf Sorbitan basierenden Emulgator in einer Menge von bis zu 20 Gew.-%, bezogen auf Weichmacher (B), enthält.

4. Flexibles Bündel geschlichteter Fasern nach Anspruch 1, dadurch gekennzeichnet, daß die wäßrige chemische Beschichtungszusammensetzung weiterhin (F) ein Silankupplungsmittel enthält.

5. Flexibles Bündel geschlichteter Fasern nach Anspruch 1, dadurch gekennzeichnet, daß die wäßrige chemische Beschichtungszusammen. setzung weiterhin (G) ein in Wasser lösliches, dispergierbares oder emulgierbares feuerhemmendes Mittel enthält.

6. Flexibles Bündel geschlichteter Fasern nach Anspruch 1, dadurch gekennzeichnet, daß die wäßrige chemische Beschichtungszusammensetzung weiterhin (H) einen in Wasser löslichen, dispergierbaren oder emulgierbaren Farbstoff oder Pigment enthält.

7. Flexibles Bündel geschlichteter Fasern nach Anspruch 1, dadurch gekennzeichnet, daß die wäßrige chemische Beschichtungszusammensetzung weiterhin (I) ein Antistatikum enthält.

8. Flexibles Bündel geschlichteter Fasern nach Anspruch 1, dadurch gekennzeichnet, daß der Weichmacher (B) ein gemischter normal-Alkyltrimellithsäureester ist.

9. Flexibles Bündel geschlichteter Fasern nach Ansprüchen 1-8, dadurch gekennzeichnet, daß die Fasern Glasfasern sind.

10. Flexibles Bündel geschlichteter Fasern nach Ansprüchen 1, 2 und 3, dadurch gekennzeichnet, daß die wäßrige chemische Beschichtungszusammensetzung enthält:
(A) 45-80 Gew.-%, bezogen auf nichtwäßrige Bestandteile der Beschichtungszusammensetzung, eines oder mehrerer elastomerer härtbarer Polyurethane,
(B) 15-40 Gew.-%, bezogen auf nichtwäßrige Bestandteile der Beschichtungszusammensetzung, eines oder mehrerer Weichmacher mit einem Siedepunkt über 225°C bei einem Druck von 13,33 mbar,
(C) Wasser in einer wirksamen Menge, um eine Imprägnier- und Beschichtungszusammensetzung für das Faserbündel zu schaffen,
(D) mindestens eine mikrokristalline Wachsdispersion in einer Menge von 0-25 Gew.-%, bezogen auf nichtwäßrige Bestandteile der Beschichtungszusammensetzung, und
(E) mindestens einen auf Sorbitan basierenden Emulgator in einer Menge von 10 Gew.-% des Weichmachers.

11. Flexibles Bündel geschlichteter Fasern nach Anspruch 2, dadurch gekennzeichnet, daß das Wachs ein aliphatisches Kohlenwasserstoffwachs in einem wäßrigen Medium ist.

12. Flexibles Bündel geschlichteter Fasern nach Anspruch 1, dadurch gekennzeichnet, daß das Polyurethan (A) aliphatisch und in Wasser dispergierbar, emulgierbar oder löslich ist.

13. Wäßrige chemische Imprägnier- und Beschichtungszusammensetzung, enthaltend:
(A) mindestens ein elastomeres härtbares Polyurethan,
(B) mindestens einen Weichmacher mit einem Siedepunkt über 225°C bei einem Druck von 13,33 mbar (10 mm Hg) in einer Menge von mindestens 15 Gew.-% des nichtwäßrigen Anteils der Zusammensetzung und
(C) Wasser in einer wirksamen Menge, um eine Imprägnier- und Beschichtungszusammensetzung für ein Faserbündel zu schaffen,
wobei die Zusammensetzung kein Vernetzungsmittel für das Polyurethan enthält.

14. Wäßrige Imprägnierzusammensetzung nach Anspruch 13, dadurch gekennzeichnet. daß sie weiterhin einen Bestandteil, ausgewählt aus der aus einer mikrokristallinen Wachsdispersion, Emulgator, Silankupplungsmittel, feuerhemmendem Mittel, Farbstoff, Pigment und einem Antistatikum bestehenden Gruppe, enthält.

15. Verwendung der wäßrigen Beschichtungszusammensetzung nach einem der Ansprüche 13 und 14 zum Beschichten und Imprägnieren mindestens eines Teils eines Faserbündels, wobei jedes Faserbündel eine Vielzahl geschlichteter Fasern enthält.

## Revendications

1. Paquet ou faisceau souple de fibres ensimées comportant sur elles, le résidu séché d'une composition aqueuse d'imprégnation et de revêtement chimique, laquelle composition comprend :
(A) au moins un polyuréthanne élastomérique et durcissable,
(B) au moins un plastifiant possédant un point d'ébullition supérieur à 225°C, à la pression de 13,33 mbars (10 mm de Hg), en une proportion d'au moins 15% en poids de la partie non aqueuse de la composition et
(C) de l'eau en une proportion efficace pour donner une composition de revêtement et d'imprégnation pour le paquet ou le faisceau de fibres,
la composition étant dépourvue de tout agent de réticulation pour le polyuréthanne.

2. Paquet ou faisceau souple de fibres ensimées suivant la revendication 1, caractérisé en ce que la composition aqueuse de revêtement chimique comprend en outre (D) une dispersion d'une cire microcristalline.

3. Paquet ou faisceau souple de fibres ensimées suivant la revendication 1, caractérisé en ce que la composition aqueuse de revêtement chimique comprend en outre (E) un émulsif à base de sorbitan, en une proportion s'élevant jusqu'à 20% en poids dudit plastifiant (B).

4. Paquet ou faisceau souple de fibres ensimées suivant la revendication 1, caractérisé en ce que la composition aqueuse de revêtement chimique comprend en outre (F) un agent de couplage du type silane.

5. Paquet ou faisceau souple de fibres ensimées suivant la revendication 1, caractérisé en ce que la composition aqueuse de revêtement chimique comprend en outre (G) un agent ignifugeant émulsifiable, dispersible, ou soluble dans l'eau.

6. Paquet ou faisceau souple de fibres ensimées suivant la revendication 1, caractérisé en ce que la composition aqueuse de revêtement chimique comprend en outre (H) un pigment ou un colorant émulsifiable, dispersible, ou soluble dans l'eau.

7. Paquet ou faisceau souple de fibres ensimées suivant la revendication 1, caractérisé en ce que la composition aqueuse de revêtement chimique comprend en outre (I) un agent antistatique.

8. Paquet ou faisceau souple de fibres ensimées suivant la revendication 1, caractérisé en ce que le plastifiant (B) est mélangé à un trimellitate d'alkyle normal.

9. Paquet ou faisceau souple de fibres ensimées suivant l'une quelconque des revendications 1 à 8, où les fibres sont des fibres de verre.

10. Paquet ou faisceau souple de fibres de verre ensimées suivant l'une quelconque des revendications 1, 2 et 3, caractérisé en ce que la composition aqueuse de revêtement chimique comprend :
(A) de 45 à 80% en poids de ladite composition de revêtement sur une base non aqueuse d'un ou plusieurs polyuréthannes élastomériques et durcissables,
(B) de 15 à 45% en poids de ladite composition de revêtement sur une base non aqueuse d'un ou plusieurs plastifiants possédant un point d'ébullition supérieur à 225°C, à la pression de 13,33 mbars,
(C) de l'eau en une proportion efficace pour donner une composition de revêtement et d'imprégnation pour le paquet ou le faisceau de fibres,
(D) au moins une dispersion d'une cire microcristalline en une proportion de ladite composition de revêtement, sur une base non aqueuse de 0 à 25% en poids et
(E) au moins un émulsif à base de sorbitan en une proportion de 10% en poids dudit plastifiant.

11. Paquet ou faisceau souple de fibres ensimées suivant la revendication 2, caractérisé en ce que la cire est une cire aliphatique hydrocarbonée dans un milieu aqueux.

12. Paquet ou faisceau souple de fibres ensimées suivant la revendication 1, caractérisé en ce que le polyuréthanne (A) est aliphatique et est dispersible, émulsifiable, ou soluble dans l'eau.

13. Composition aqueuse d'imprégnation et de revêtement chimique, qui comprend:
(A) au moins un polyuréthanne élastomérique et durcissable,
(B) au moins un plastifiant possédant un point d'ébullition supérieur à 225°C, à la pression de 13,33 mbars (10 mm de Hg), en une proportion d'au moins 15% en poids de la partie non aqueuse de la composition et
(C) de l'eau en une proportion efficace pour donner une composition de revêtement et d'imprégnation pour le paquet ou le faisceau de fibres,
la composition étant dépourvue de tout agent de réticulation pour le polyuréthanne.

14. Composition aqueuse d'imprégnation suivant la revendication 13, qui comprend en outre un ingrédient choisi dans le groupe formé par une dispersion de cire microcristalline, un émulsif, un agent de couplage du type silane, un agent ignifugeant, un colorant, un pigment et un agent antistatique.

15. Utilisation de la composition aqueuse de revêtement suivant l'une quelconque des revendications 13 et 14, pour revêtir et imprégner au moins une partie d'un paquet ou faisceau de fibres, chaque paquet ou faisceau de fibres comprenant une multiplicité de fibres ensimées.
